# EUROPEAN PATENT APPLICATION

(11) **EP 4 597 716 A1**
(43) Date of publication of application: **06.08.2025**
(21) Application number: 23907611.0
(22) Date of filing: 15.12.2023
(51) Int. Cl.: H01M 50/367, H01M 50/24, H01M 50/262, H01M 50/251

(54) **BATTERY PACK WITH IMPROVED SAFETY**

(30) Priority: 20.12.2022 KR 20220179751
(71) Applicant: LG Energy Solution, Ltd., Seoul 07335 (KR)
(72) Inventor: KIM, Youngbum, Daejeon 34122 (KR); KIM, Kiyoun, Daejeon 34122 (KR); AHN, Jong Kyu, Daejeon 34122 (KR); YUN, Youngwon, Daejeon 34122 (KR); KIM, Yongmin, Daejeon 34122 (KR); CHOI, Dongmin, Daejeon 34122 (KR)
(74) Representative: Plasseraud IP
(86) International application number: PCT/KR2023/020719
(87) International publication number: WO 2024/136325

(57) **Abstract**

A battery pack according to one embodiment of the present disclosure includes: a cell module assembly including a battery cell stack in which a plurality of battery cells are stacked; a pack case configured to house the cell module assembly and including a venting port on at least one surface; and an outer cover that covers at least one surface of the pack case and is arranged apart from the outer surface of the pack case by a prescribed distance, wherein a space between the pack case and the outer cover forms a venting flow path through which venting gas generated during the thermal event of the battery cell moves, and wherein the venting gas is discharged to the outside through an opened space between the outer cover and the pack case formed on at least one end part of the outer cover.

## Description

### [TECHNICAL FIELD]

### Cross Citation with Related Application(s)

This application claims the benefit of Korean Patent Application No. 10-2022-0179751 filed on December 20, 2022 in the Korean Intellectual Property Office, the disclosure of which is incorporated herein by reference in its entirety.

The present disclosure relates to a battery pack, and more particularly, to a battery pack and the like configured to ensure safety even when thermal events occur.

### [BACKGROUND]

Currently, commercially available secondary batteries include a nickel cadmium battery, a nickel hydrogen battery, a nickel zinc battery, a lithium secondary battery, and the like, and among them, the lithium secondary battery has come into the spotlight because it has advantages, for example, hardly exhibiting memory effects compared to nickel-based secondary batteries and thus being freely charged and discharged, and having very low self-discharge rate and high energy density.

A lithium secondary battery generally uses lithium-based oxide and a carbon material as a positive electrode active material and a negative electrode active material respectively. The lithium secondary battery includes an electrode assembly in which a positive electrode plate and a negative electrode plate respectively coated with the positive electrode active material and the negative electrode active material are arranged with a separator interposed between them, and an exterior material or a battery case which hermetically houses the electrode assembly together with an electrolyte.

Depending on the shape of the exterior material, generally, a lithium secondary battery may be classified into a can type secondary battery where the electrode assembly is incorporated into a metal can and a pouch type battery where the electrode assembly is incorporated into a pouch of an aluminum laminate sheet.

Such secondary batteries are widely used not only in small-sized devices such as portable electronic devices, but also in medium- and large-sized devices such as electric vehicles and energy storage systems (ESS), and the frequency of the use thereof is rapidly increasing. Moreover, recently, the tendency of using home battery packs for storing electrical power is increasing.

Various battery packs, including such home battery packs, include a plurality of battery cells (secondary batteries) to increase capacity and/or output. In particular, in order to increase the energy density of a battery pack, a plurality of battery cells are often arranged densely in a very narrow space.

In such a battery pack configuration, one of the typically important issues is safety. In particular, if a thermal event occurs in any one of the plurality of battery cells included in the battery pack, it is necessary to block such events from propagating to other battery cells. If thermal propagation between battery cells is not properly suppressed, this may lead to thermal events in multiple battery cells included in the battery pack, which may cause problems such as ignition or explosion of the battery pack. Furthermore, the ignition or explosion occurring in a battery pack can cause great damage to human life or property in the surrounding area. In particular, in the case of a home battery pack, if ignition or explosion occurs, it can impair the safety of people living in the house, and the fire may spread to the house and cause a great damage.

### [DETAILED DESCRIPTION OF THE INVENTION]

### [Technical Problem]

Therefore, the present disclosure has been designed to solve the above-mentioned problems, and an object of the present disclosure is to provide a battery pack and the like whose structure is improved so as to properly control a thermal event that has occurred inside the battery pack.

However, the technical problems to be solved by embodiments of the present disclosure are not limited to the above-mentioned problems, and other problems not mentioned herein can be clearly understood by those skilled in the art from the following description.

### [Technical Solution]

According to one embodiment of the present disclosure, there is provided a battery pack comprising: a cell module assembly including a battery cell stack in which a plurality of battery cells are stacked; a pack case configured to house the cell module assembly and including a venting port on at least one surface; and an outer cover that covers at least one surface of the pack case and is arranged apart from the outer surface of the pack case by a prescribed distance, wherein a space between the pack case and the outer cover forms a venting flow path through which venting gas generated during a thermal event of the battery cell moves, and wherein the venting gas is discharged to the outside through an opened space between the outer cover and the pack case, which is formed on at least one end part of the outer cover.

The pack case may include at least one partition wall that protrudes from an outer surface of the pack case toward the outer cover so as to increase the path along which the venting gas moves.

The partition wall may include a first partition wall having a shape extending along a length direction or a width direction of the pack case.

The partition wall includes a second partition wall having a shape extending along a height direction of the pack case, and the first partition wall and the second partition wall may intersect with each other.

The outer cover may include at least one partition wall that protrudes from an inner surface of the outer cover toward the pack case so as to increase the path along which the venting gas moves.

The partition wall may include a first partition wall having a shape extending along a length direction or a width direction of the outer cover.

The partition wall includes a second partition wall having a shape extending along a height direction of the outer cover, and the first partition wall and the second partition wall may intersect with each other.

The pack case further includes a spacer that protrudes from the outer surface of the pack case and contacts the outer cover, and a distance at which the spacer protrudes may be greater than a distance at which the partition wall protrudes.

The pack case includes at least one venting port on the front surface and both side surfaces, and the outer cover may cover the front surface and both side surfaces of the pack case, respectively.

The outer cover includes an eaves that covers the opened space between the pack case and the outer cover, and the eaves may include a plurality of venting holes arranged along the eaves.

The battery pack further comprises a fastening member that connects the pack case and the outer cover to each other, wherein the fastening member may include a female fastening member and a male fastening member.

The battery pack is provided in a plurality of numbers, and the plurality of battery packs may be mechanically or electrically connected to each other.

The plurality of battery packs can be stacked in an up and down direction.

A height of the outer cover may be smaller than a height of the pack case so that each of the plurality of battery packs has the opened space between the pack case and the outer cover.

According to another aspect of the present disclosure for achieving the above object, there is provided an energy storage system comprising one or more of the above-mentioned battery pack according to the present disclosure.

### [Advantageous Effects]

According to one aspect of the present disclosure, a battery pack with improved electrical connectivity can be provided.

Particularly, according to one embodiment of the present disclosure, even if a thermal event occurs inside the battery pack, such a thermal event can be quickly controlled.

Particularly, according to one embodiment of the present disclosure, even if a thermal event occurs inside the battery pack, the flame generated in the battery pack is not discharged to the outside of the battery pack, and can be naturally extinguished in the inside of the battery pack.

Moreover, if an issue such as thermal runaway or ignition occurs in some of the battery cells among the plurality of battery cells included in the battery pack, such an issue can be effectively prevented from being transferred to other modules.

Further, according to one aspect of the present invention, a battery pack with a simple structure and enhanced thermal safety can be provided.

Particularly, according to one embodiment configuration of the present disclosure, a new part for injecting a fire extinguishing agent does not need to be added, thereby making it possible to provide a battery pack with excellent manufacturability and economic efficiency.

Further, according to one aspect of the present disclosure, products with various voltage bands and/or storage capacities can be provided by stacking the same type of battery packs stacked in a plurality of numbers.

In addition, some other additional effects can be achieved by various embodiments of the present disclosure. Various effects obtainable from the present disclosure will be described in detail in respective embodiments, or the description of effects that can be easily understood by those skilled in the art will be omitted.

### [BRIEF DESCRIPTION OF THE DRAWINGS]

The accompanying drawings illustrate preferred embodiments of the present disclosure and, together with the following descriptions, serve to provide further understanding of the technical spirit of the present disclosure. However, the present disclosure is not to be construed as being limited to the drawings.
FIG. 1 is an exploded perspective view schematically showing the configuration of a battery pack according to an embodiment of the present disclosure.
FIG. 2 is a diagram schematically showing the configuration in which a fire extinguishing agent is discharged from the battery pack of FIG. 1.
FIG. 3 is a perspective view schematically showing the configuration of a battery pack according to another embodiment of the present disclosure.
FIG. 4 is a cross-sectional view taken along line A4-A4' in FIG. 3.
FIG. 5 is an exploded perspective view schematically showing the configuration of a battery pack according to another embodiment of the present disclosure.
FIG. 6 is a perspective view of a cell module assembly included in the battery pack of FIG. 5.
FIG. 7 is a perspective view of a blocking member included in the battery pack of FIG. 5.
FIG. 8 is a perspective view of a pack case included in the battery pack of FIG. 5.
FIG. 9 is a perspective view of the outer cover included in the battery pack of FIG. 5.
FIG. 10 is a perspective view of a case where the outer cover is coupled to the pack case.
FIG. 11 shows a cross section along line A6-A6' in FIG. 10.
FIGS. 12 and 13 show details of the flow of venting gas in FIG. 10, respectively.
FIG. 14 is a diagram illustrating a case where the cell module assembly of FIG. 8 is housed in a pack case.
FIG. 15 is a perspective view of a fire extinguishing tank included in the battery pack of FIG. 5.
FIG. 16 is a perspective cross-sectional view of the fire extinguishing tank of FIG. 15.
FIG. 17 is a perspective view of a battery pack in which all the constituent elements of the above-mentioned battery pack are coupled with each other with reference to FIGS. 5 to 16.
FIG. 18 is a perspective view schematically showing the battery pack of FIGS. 1 to 17.
FIGS. 19 and 20 are diagrams showing an embodiment in which the pack cases shown in FIG. 18 are stacked in mutually different numbers.

### [DETAILED DESCRIPTION OF THE EMBODIMENTS]

Hereinafter, preferred embodiments of the present disclosure will be described in detail with reference to the accompanying drawings. Prior to description, it should be understood that terms and words used in the specification and the appended claims should not be construed as limited to general and dictionary meanings, but interpreted as having meanings and concepts corresponding to technical aspects of the present disclosure based on the principle that the inventor can properly define the concepts of the terms and words in order to describe his/her own invention as best as possible.

Therefore, the description proposed herein is just a preferable example for the purpose of illustrations only, and is not intended to limit the scope of the disclosure, so it will be apparent to those skilled in the art that other equivalents and modifications can be made thereto without departing from the spirit and scope of the invention.

A description of portions that are not related to the description will be omitted for clarity, and same reference numerals designate same or like elements throughout the description.

Further, in the drawings, the size and thickness of each element are arbitrarily illustrated for convenience of description, and the present invention is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

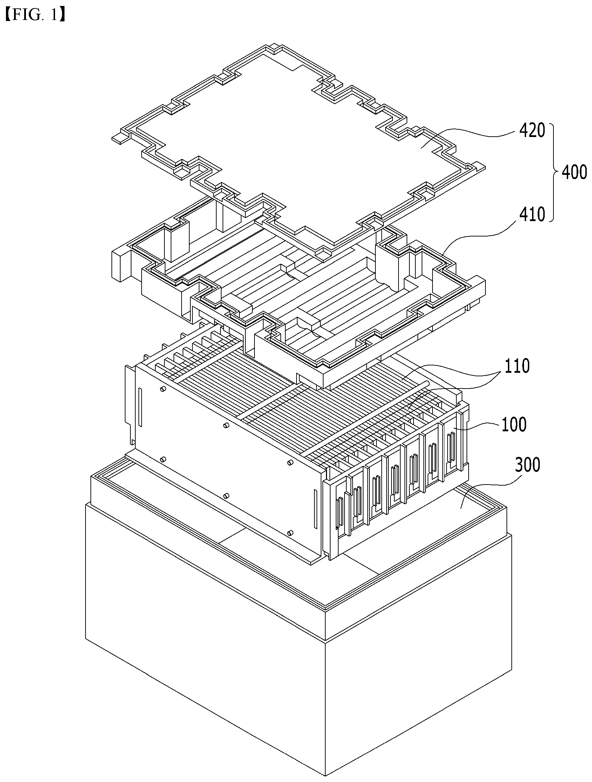

FIG. 1 is an exploded perspective view schematically showing the configuration of a battery pack according to an embodiment of the present disclosure.

Referring to FIG. 1, the battery pack according to the present disclosure includes a cell module assembly 100, a pack case 300, and a fire extinguishing tank 400.

The cell module assembly 100 may include one or more battery cells 110. Here, each battery cell 110 may mean a secondary battery. The secondary battery may include an electrode assembly, an electrolyte, and a battery case. Particularly, the battery cell 110 provided in the cell module assembly 100 may be a pouch type secondary battery. However, other forms of secondary batteries, such as cylindrical batteries or prismatic batteries, may also be employed in the cell module assembly 100 of the present disclosure.

A plurality of secondary batteries may form the cell module assembly 100 in a shape stacked with each other. That is, the battery cell stack can form the cell module assembly 100. For example, the plurality of battery cells 110 may be stacked in such a manner that they are arranged in a horizontal direction (X-axis direction in the figure) while being erected in an up and down direction (Z-axis direction in the figure). Each battery cell 110 may be provided with an electrode lead, wherein the electrode lead may be located at both end parts, or may be located at one end part of each battery cell 110. A secondary battery in which electrode leads protrude in both directions may be called a bidirectional cell, and a secondary battery in which electrode leads protrude in one direction can be called a unidirectional cell. In FIG. 1, a bidirectional cell is illustrated. However, the present disclosure is not limited by a specific type or form of the secondary battery, and various forms of secondary batteries known at the time of filing the present application can be employed in the cell module assembly 100 of the present disclosure.

The pack case 300 may be configured to have an empty space formed therein and house the cell module assembly 100 in the internal space. For example, the pack case 300 may be configured in a box shape as shown in FIG. 1. The box-shaped pack case 300 may be integrally molded, or may be made by coupling at least one surface with an adjacent surface.

The fire extinguishing tank 400 can hold a fire extinguishing agent. Particularly, the fire extinguishing tank 400 comprises an internal space and can hold a fire extinguishing agent in the internal space. For example, the fire extinguishing tank 400 may comprise a lower tank 410 and an upper cover 420, as shown in FIG. 1. Here, the lower tank 410 is configured in the form of a box having an opened upper part, and can provide a space where a fire extinguishing agent can be held. In addition, the upper cover 420 may be configured to cover the upper opening part of the lower tank 410 and seal the fire extinguishing agent holding space of the lower tank 410.

The fire extinguishing tank 400 may be housed inside the pack case 300. In particular, the fire extinguishing tank 400 may be arranged on an upper side of the cell module assembly 100 in the internal space of the pack case 300.

According to such an embodiment configuration of the present disclosure, a fire extinguishing agent is discharged from the fire extinguishing tank 400 located on the upper side of the cell module assembly 100, so that the thermal event of the cell module assembly 100 can be more easily controlled. Particularly, the fire extinguishing agent discharged from the fire extinguishing tank 400 can easily move downward by gravity. Therefore, heat or fire suppression of the cell module assembly 100 using a fire extinguishing agent can be performed more easily.

Particularly, when the cell module assembly 100 is provided with a plurality of battery cells 110 arranged side by side in the horizontal direction, that is, in the left and right direction (X-axis direction), as shown in FIG. 1, a fire extinguishing agent can be easily supplied to all battery cells 110 if the fire extinguishing agent is discharged from the fire extinguishing tank 400 located at the upper part. Therefore, according to such an embodiment configuration, thermal event suppression for the entire cell module assembly 100 can be performed more effectively.

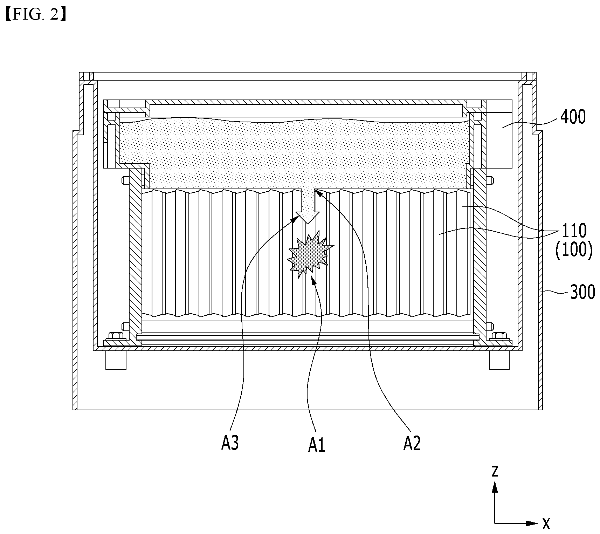

The fire extinguishing tank 400 may be configured to discharge a fire extinguishing agent toward the cell module assembly 100 when heat is applied from the cell module assembly 100. This will be described in more detail with reference to FIG. 2.

FIG. 2 is a diagram schematically showing the configuration in which a fire extinguishing agent is discharged from the battery pack of FIG. 1.

Referring to FIG. 2, a fire extinguishing tank 400 is located at the upper part of the cell module assembly 100. A thermal event such as overheating, ignition, or thermal runaway may occur in a specific battery cell 110, such as a portion indicated by A1 among a plurality of battery modules stacked in a left and right direction (e.g., the X-axis direction in the figure). In this case, the heat generated in the corresponding battery cell 110 may be applied to the fire extinguishing tank 400, such as a portion indicated by A2 in FIG. 2. Then, the fire extinguishing agent may be discharged from the fire extinguishing tank 400, as indicated by arrow A3.

Particularly, the fire extinguishing tank 400 may be configured to be at least partially melted by heat applied from the cell module assembly 100. For example, in the configuration of FIG. 2, the portion indicated as A2 of the fire extinguishing tank 400 may be melted by heat. Then, through the portion melted in this way, the fire extinguishing agent can be discharged, as indicated by an arrow A3.

For this purpose, the fire extinguishing tank 400 may be constructed of a material that can be at least partially melted by the heat applied from the cell module assembly 100. For example, the fire extinguishing tank 400 may be wholly constructed of a plastic material. In particular, the fire extinguishing tank 400 may be constructed in the form of a plastic injection material.

Further, the fire extinguishing tank 400 can be configured to be melted by venting gas or heat ejected from the battery cell 110. For example, when a thermal runaway occurs in the battery cell 110 and venting gas is ejected, the venting gas may be in a high-temperature state of a certain temperature or higher. The fire extinguishing tank 400 may be constructed of a material and/or form that can be melted by the high-temperature venting gas. Alternatively, when a thermal runaway occurs in the battery cell 110, the temperature of the battery cell 110 may be higher than the normal state even if the venting gas is not ejected. The fire extinguishing tank 400 may be constructed of a material and/or form that can be melted by heat applied from the battery cell 110 in such an abnormal high-temperature state.

In particular, the fire extinguishing tank 400 may be configured so that the base plate 411 is melted by a high temperature of heat and/or gas generated in the thermal event of the battery cell 110. In this case, the fire extinguishing agent may flow into the bottom melting section of the fire extinguishing tank 400 and be discharged downward. Therefore, the fire extinguishing agent can be quickly injected into the cell module assembly 100.

According to such an embodiment configuration of the present disclosure, the fire extinguishing agent is injected in such a way that the injection material melts, thereby effectively suppressing thermal events inside the battery pack, and also minimizing thermal event propagation between battery cells 110.

The fire extinguishing tank 400 may hold a fire extinguishing agent in a liquid state. In this case, the fire extinguishing agent may be referred to as fire extinguishing liquid. For example, the fire extinguishing tank 400 may hold water or other cooling liquid as a fire extinguishing agent. Further, the fire extinguishing tank 400 can hold antifreeze as a fire extinguishing agent. In particular, when the battery pack is used in low-temperature seasons such as winter or in low-temperature areas such as polar regions, the fire extinguishing tank 400 can hold antifreeze, which does not easily freeze even at low temperatures, as a fire extinguishing agent. Moreover, in the case of a home battery pack, since it can be located outdoors, antifreeze can be provided as a fire extinguishing agent.

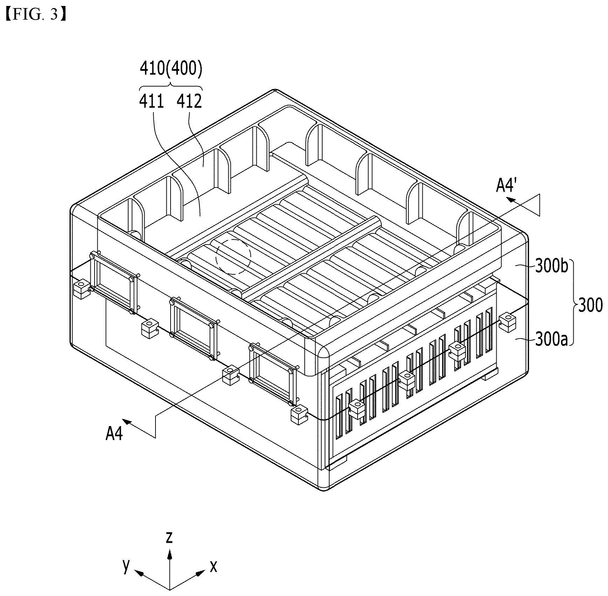

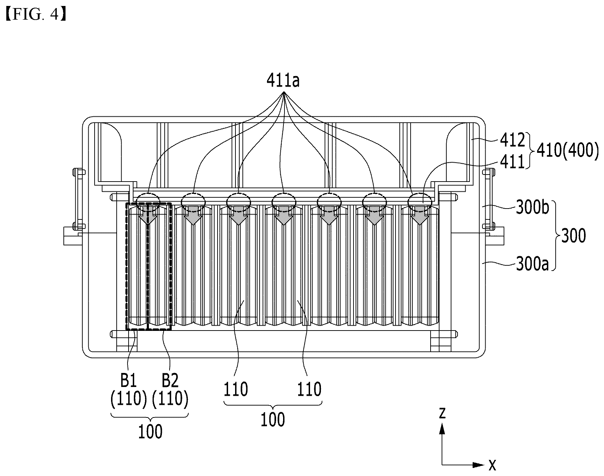

The fire extinguishing tank 400 may be configured so that the thickness of the base plate 411 varies depending on its position. This will be described in more detail with reference to FIGS. 3 and 4.

FIG. 3 is a perspective view schematically showing the configuration of a battery pack according to another embodiment of the present disclosure. However, in FIG. 3, for convenience of explanation, some components are illustrated transparently. FIG. 4 is a cross-sectional view taken along line A4-A4' in FIG. 3. Regarding various embodiments included in this specification, including the present embodiment, detailed descriptions of the parts that can be applied identically or similarly to the portions described in other embodiments will be omitted, and the portions where there are differences will be mainly described.

Referring to FIGS. 3 and 4, the fire extinguishing tank 400 may include a base plate 411 and a side wall 412. Here, the side wall 412 may be configured to protrude upward from the edge of the base plate 411. Further, the lower part and the side part of the fire extinguishing tank 400 are limited by the base plate 411 and the side wall 412, thereby forming a space capable of holding the fire extinguishing agent. At this time, the upper part of the fire extinguishing tank 400 may be sealed by the pack case 300. That is, as shown in FIG. 4, the pack case 300 includes a lower case 300a and an upper case 300b, and the upper part of the fire extinguishing tank 400 is covered by the upper case 300b, so that a fire extinguishing agent may be held inside the fire extinguishing tank 400. Alternatively, the fire extinguishing tank 400 may be configured so as to include an upper cover 420 to seal the upper part of the fire extinguishing agent holding space, as shown in FIG. 1.

In this manner, in the configuration of the fire extinguishing tank 400 provided with the base plate 411, the base plate 411 may be formed to have different thicknesses for each portion. In particular, the fire extinguishing tank 400 may be configured to have a thin thickness in certain portions, such as the portion indicated by 411a in FIGS. 3 and 4. For example, the base plate 411 of the fire extinguishing tank 400 is constructed in the form of a plastic injection material having a thickness of 1 mm as a whole, and the portion indicated by 411a may be configured to have a thickness of 0.5 mm.

In particular, a thinly formed portion of the base plate 411 of the fire extinguishing tank 400 may function as a fragile portion 411a. That is, when the temperature rises in the cell module assembly 100, such a fragile portion 411a may be damaged first. Further, if the fragile portion 411a is damaged, the fire extinguishing agent held inside the fire extinguishing tank 400 may be discharged toward the cell module assembly 100 via the fragile portion 411a.

The fragile portion 411a may be provided in a plurality of numbers. For example, the fragile portion 411a may have a shape narrow in width and long in length. That is, it may have a linear shape and may be arranged in parallel with one edge of the fire extinguishing tank 400, and the fragile portions 411a may be arranged in parallel to each other. According to the above embodiment configuration, if venting gas, fire or the like occurs due to thermal runaway on the cell module assembly 100 side, a structure for injecting a fire extinguishing agent such as cooling water does not need to be separately provided. Therefore, the configuration for injection the fire extinguishing agent inside the battery pack can be realized with a simple structure. Furthermore, in such a configuration, when an event occurs, the fire extinguishing agent can be discharged through the fragile portion 411a formed in a thin thickness, and thus, the portion where the fire extinguishing agent is discharged can be designated in advance.

In the above embodiment configuration, as shown in FIG. 4, a plurality of fragile portions 411a may be provided in one fire extinguishing tank 400. Moreover, the plurality of fragile portions 411a can be arranged on the base plate 411 of the fire extinguishing tank 400 while being spaced apart by a prescribed distance along the stacking direction of the cell module assembly 100. For example, in the cell module assembly 100, a plurality of battery cells 110 may be stacked in the left and right direction (X-axis direction), and in the base plate 411 of the fire extinguishing tank 400 located at the upper part of the cell module assembly 100, a plurality of fragile portions may also be arranged in the left and right direction while being spaced apart from each other.

In particular, the fire extinguishing tank 400 may be configured such that the fragile portion 411a having a relatively thin thickness is located in the central portion between cells stacked in the horizontal direction.

For example, in the configuration of FIG. 4, B1 and B2, which are two battery cells 110, are arranged adjacent to each other in the left and right direction in the left side portion of the cell module assembly 100. At this time, the fragile portion 411a located on the leftmost side among several fragile portions 411a may be arranged between B1 and B2 in the left and right direction. That is, the fragile portion 411a may be located at an upper part of B1 and B2 in the up and down direction (Z-axis direction), but may be located between B1 and B2 in the horizontal direction (X-axis direction). Further, the battery cells 110 other than B1 and B2 can also be configured such that one fragile portion 411a is located in the space between respective two adjacent battery cells 110 in the horizontal direction.

According to such an embodiment configuration of the present disclosure, when a thermal event occurs in a specific battery cell 110 and heat is applied to the fragile portion 411a located at the upper part, the fragile portion 411a may be damaged. And, the fire extinguishing agent is discharged through the damaged fragile portion 411a, and a fire extinguishing agent may flow into the space between adjacent battery cells 110 as indicated by the arrow in FIG. 4.

Therefore, according to such an embodiment configuration, it is possible to more effectively prevent thermal events from being transmitted between battery cells 110. Further, according to the embodiment configuration of the present disclosure, it is possible to intensively inject the fire extinguishing agent around the battery cell 110 where a thermal event such as overheating or ignition has occurred, so that more effective cooling and extinguishing operations can be performed. Therefore, according to the above embodiment configuration, when a fire or the like occurs inside the battery, it may be possible to inject a fire extinguishing agent in the right time and the right place without any other parts except for the fire extinguishing tank 400.

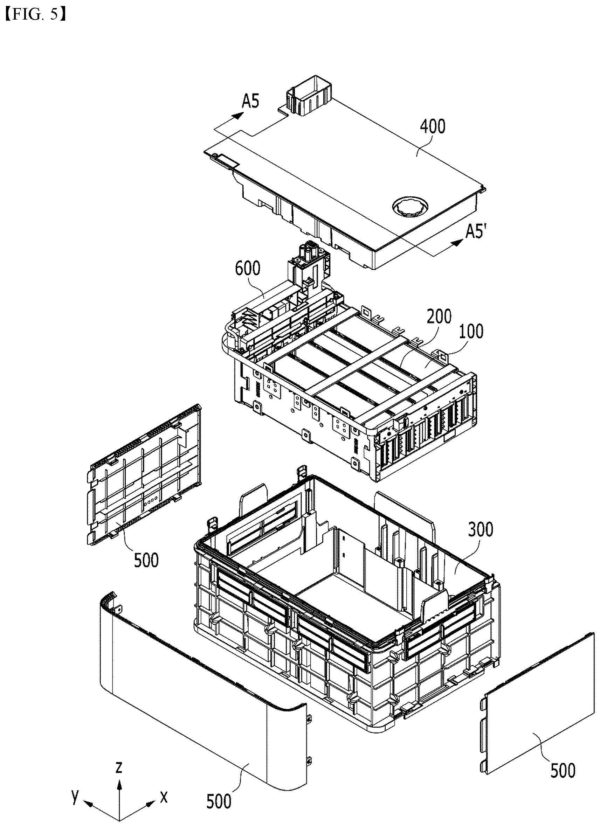

FIG. 5 is an exploded perspective view schematically showing the configuration of a battery pack according to another embodiment of the present disclosure.

Referring to FIG. 5, the battery pack includes a cell module assembly 100, a blocking member 200, a pack case 300, a fire extinguishing tank 400, an outer cover 500, and an electrical connection unit 600.

Also in FIG. 5, the cell module assembly 100 may be configured such that the plurality of battery cells 110 (see FIG. 1) are stacked in a shape arranged in a horizontal direction (e.g., the X-axis direction in the figure) while being erected in the up and down direction (e.g., the Z-axis direction in the figure). At this time, the longitudinal direction of the battery cell 110 is, for example, the Y-axis direction in the figure. For convenience of understanding, the illustration of the battery cell 110 is omitted in FIG. 5. When the battery cell 110 is, for example, a pouch type battery cell or a prismatic battery cell, the battery cell 110 is arranged side by side (in parallel) with the blocking member 200.

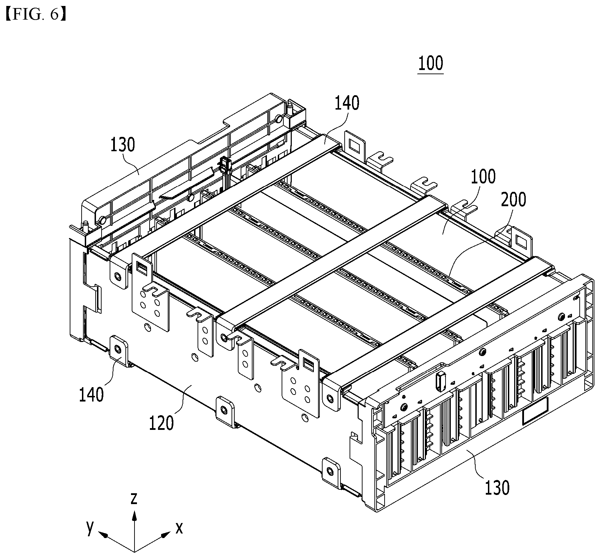

FIG. 6 is a perspective view of a cell module assembly 100 included in the battery pack of FIG. 5.

For reference, in order to more clearly illustrate the components included in the cell module assembly 100, FIG. 6 shows the remaining components excluding the plurality of battery cells 110. The plurality of battery cells 110 may be normal pouch type battery cells or prismatic battery cells.

Referring to FIG. 6, a pair of busbar housings 130 are arranged on the front and rear surfaces of the stack of a plurality of battery cells 110. Each of the busbar housings 130 is arranged in a direction perpendicular to the longitudinal direction of the battery cell 110 (e.g., the X-axis direction in the figure).

A pair of end plates 120 are provided at both side ends of the stack of the plurality of battery cells 110, respectively. The end plate 120 is arranged in parallel with the battery cell 110. A pair of end plates 120 each connect a pair of busbar housings 130.

Each of the upper and lower sides between the pair of end plates 120 may include at least one strap 140 that connects between the pair of end plates 120. The strap 140 strengthens the binding of the cell module assembly 100. More specifically, it strengthens the binding between the pair of end plates 120 and the stack of the plurality of battery cells 110 arranged between them. Thereby, it is possible to prevent the alignment of the stack of the plurality of battery cells 110 from being disturbed.

In addition, since the description regarding the cell module assembly 100 overlaps with that described in FIG. 1, reference is made to those described above in relation to FIG. 1.

Meanwhile, as shown in FIG. 5, a plurality of battery cells 110 can be grouped into a predetermined number and housed. Further, as shown in FIGS. 5 to 7, a blocking member 200 is provided between a group of a plurality of battery cells 110 (a predetermined number) and an adjacent group of a plurality of battery cells 110 (a predetermined number).

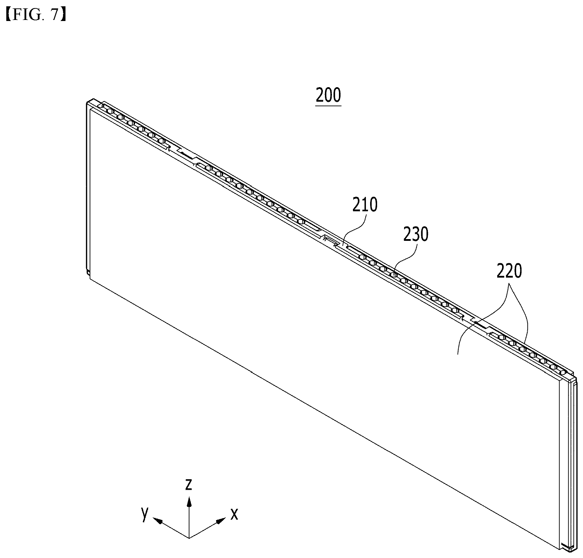

FIG. 7 is a perspective view of a blocking member 200 included in the battery pack of FIG. 5. The blocking member 200 may be configured to be interposed between adjacent battery cells 110 to block heat. For example, when a thermal event occurs in some of the battery cells 110 and heat or high-temperature venting gas is generated, the generated heat or gas may be suppressed or blocked from being transferred to the adjacent battery cell 110 by the blocking member 200. Further, the blocking member 200 can play a role of blocking flames or sparks emitted from a specific battery cell 110.

The blocking member 200 has a substantially plate-like shape. The blocking member 200 may be configured in a plate shape being erected in the up and down direction. Moreover, the blocking member 200 may have a height that is the same as or similar to the height of the battery cell 110 being erected in the up and down direction. The height of the blocking member 200 may be smaller or larger than the height of the battery cell 110.

A plurality of blocking member 200 may be included depending on the number of battery cells. And, as described above, the blocking member 200 can be stacked together with the battery cells 110 to form the cell module assembly 100.

According to such an embodiment configuration of the present disclosure, in a battery pack containing a plurality of battery cells 110, the blocking member 200 can effectively prevent propagation of thermal runaway between battery cells.

Further, the blocking member 200 may largely have a three-layer structure. For example, a pair of swelling pads 220 are provided on both surfaces of the support plate 210, respectively. The support plate 210 maintains the shape and rigidity of the blocking member 200 and blocks flames or sparks emitted from the battery cells 110 from being transferred between the battery cells 110. The support plate 210 may be made of, for example, a metal material. The swelling pad 220 reduces the pressure applied to the battery cell 110 by the support plate 210 when the battery cell 110 swells. The swelling pad 220 may be made of, for example, silicone or soft plastic material.

On the other hand, the support plate 210 includes a plurality of through holes 230 formed by penetrating the support plate 210 in the up and down direction, and the plurality of through holes 230 are arranged along the longitudinal direction of the support plate 210.

When fire extinguishing agent (fire extinguishing liquid) is injected into the cell module assembly 100 from the fire extinguishing tank 400 located at the upper part of the cell module assembly 100, a fire extinguishing agent (fire extinguishing liquid) also enters the plurality of through holes 230. That is, as the fire extinguishing agent (fire extinguishing liquid) remains in the plurality of through holes 230, the battery cell 110 in which the thermal event has occurred can be cooled and extinguished more effectively.

The plurality of through holes 230 may be configured to be opened on both the upper and lower surfaces of the support plate 210. Alternatively, the plurality of through holes 230 may have a shape in which only the upper surface is opened and the lower surface is closed so that the fire extinguishing agent (fire extinguishing liquid) can remain within the through holes 230 for a longer period of time. In the former case, if the support plate 210 of the blocking member 200 is arranged in close contact with the inner lower surface of the pack case 300, the fire extinguishing agent (fire extinguishing liquid) may remain in the through hole 230 for a long period of time as in the latter case.

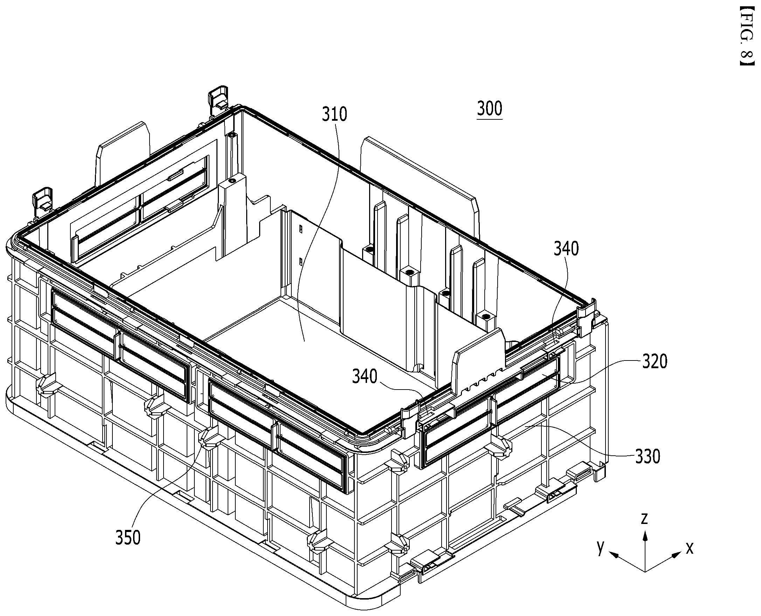

FIG. 8 is a perspective view of a pack case 300 included in the battery pack of FIG. 5. Referring to FIG. 8, the pack case 300 may be configured in a box shape. The box-shaped pack case 300 may be integrally molded, or may be manufactured in such a manner that at least one surface is coupled with an adjacent surface.

The pack case 300 includes at least one venting port 320. The upper surface of the venting port 320 may be further provided with an eaves so as to prevent rain or snow from entering the pack case 300 via the venting port 320. A filter is installed in the venting port 320.

The outer surface of the pack case 300 is provided with partition walls 330 that protrude and extend outward from the outer surface. The pack case 300 also includes a fastening member 340 capable of coupling the outer cover 500, and the pack case 300 includes a spacer 350 protruding from the outer surface. The partition wall 330, the fastening member 340, and the spacer 350 will be specifically described in the same manner as the description of the outer cover 500, which will be described later.

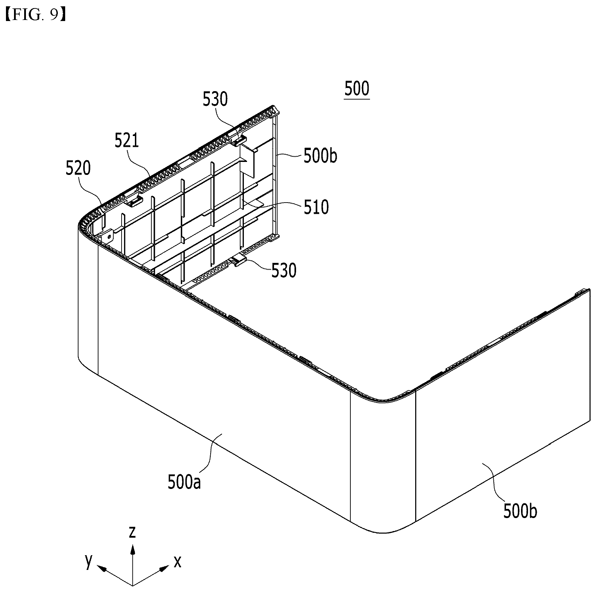

FIG. 9 is a perspective view of the outer cover 500 included in the battery pack of FIG. 5.

The outer cover 500 is coupled to the pack case 300 and covers at least one surface of the pack case 300. FIG. 9 shows a case where the front surface and both side surfaces of the pack case 300 are covered. The front cover 500a of the outer cover 500 covers the front surface of the pack case 300, and a pair of side covers 500b of the outer cover 500 cover both side surfaces of the pack case 300.

Further, the outer cover 500 covers the venting port 320 of the pack case 300 at a position spaced away from the venting port 320 by a prescribed distance. This prevents the battery cells 110 inside the pack case 300 from being directly exposed to the outside through the venting port 320.

In the pack case 300 of FIG. 8, for example, the venting ports 320 are provided on the front surface and both side surfaces of the pack case 300, respectively. Accordingly, the outer cover 500 is also provided so as to cover the front surface and both side surfaces of the pack case 300.

Meanwhile, the present disclosure is not limited to those described above, and it is sufficient that the outer cover 500 can cover the venting port 320. For example, various modifications and changes are possible, such as being able to cover all four surfaces of the front, back, and both side surfaces of the pack case 300, and being able to cover only a portion of the four side surfaces excluding the upper and lower surfaces of the pack case 300.

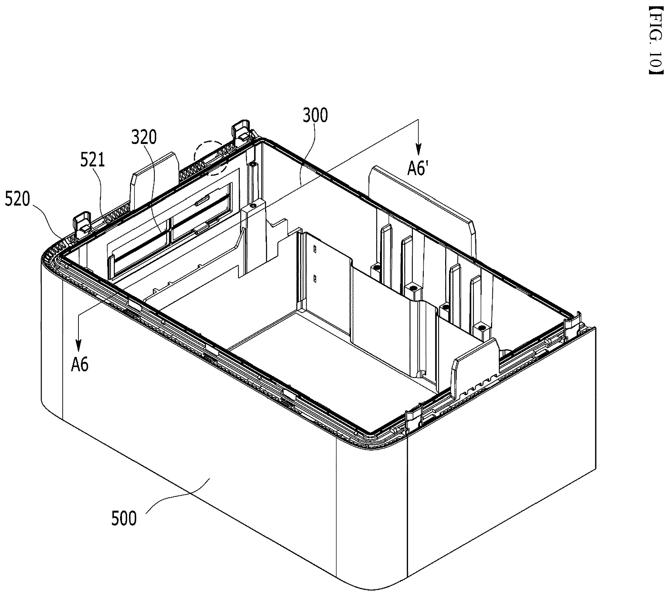

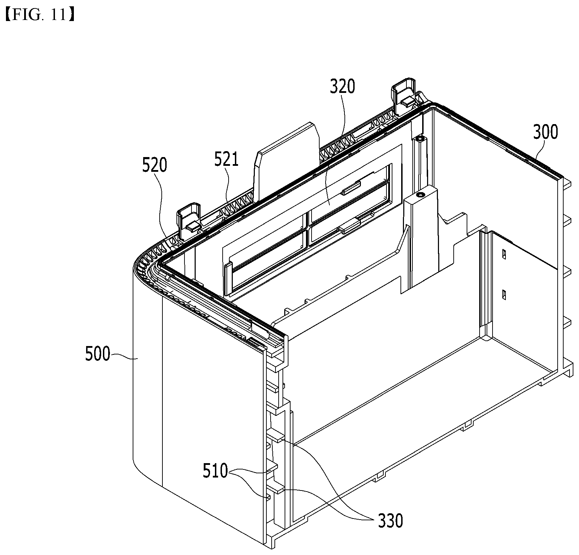

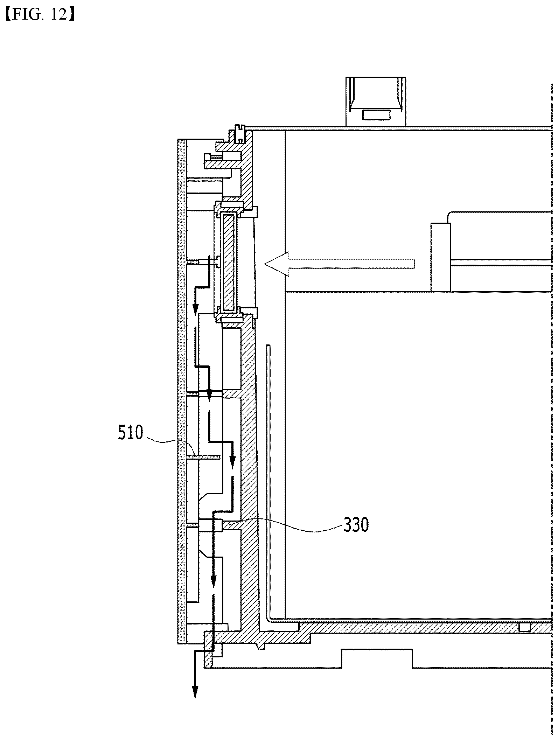

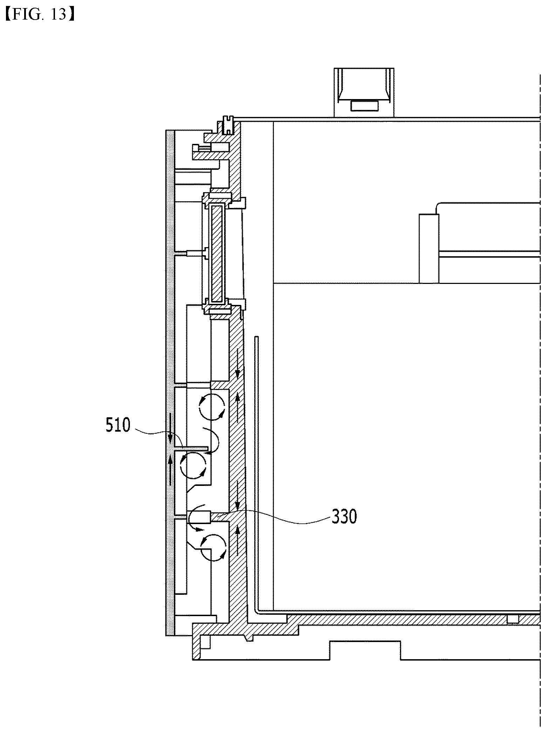

FIG. 10 is a perspective view of a case where the outer cover 500 is coupled to the pack case 300. FIG. 11 shows a cross section along line A6-A6' in FIG. 10. FIGS. 12 and 13 show details of the flow of venting gas in FIG.10, respectively. When a thermal event occurs in the battery cell 110 housed inside the pack case 300, it is possible to discharge the venting gas generated from the battery cell 110 through the venting port 320. The venting gas discharged from the venting port 320 may move through the venting flow path formed in the space between the pack case 300 and the outer cover 500, and then be discharged to the outside of the outer cover 500. At this time, the venting gas moving through the venting flow path is discharged to the outside through the opened space between the outer cover 500 and the pack case 300 formed at the end part of the outer cover 500 (upper end part and lower end part of the outer cover 500 in FIG. 10).

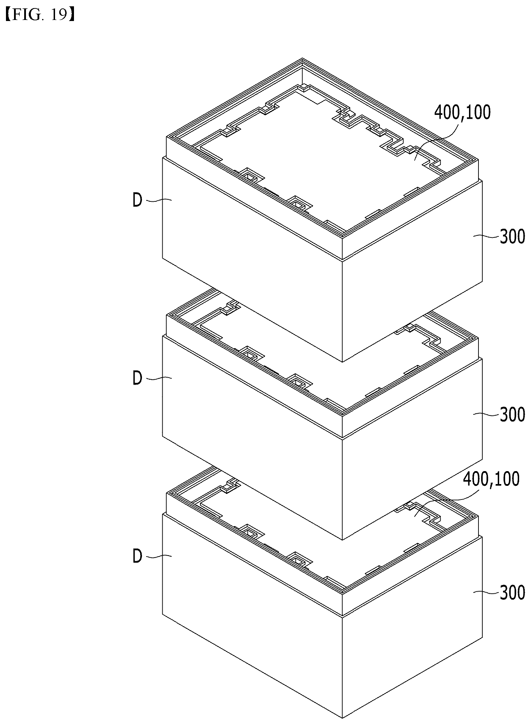

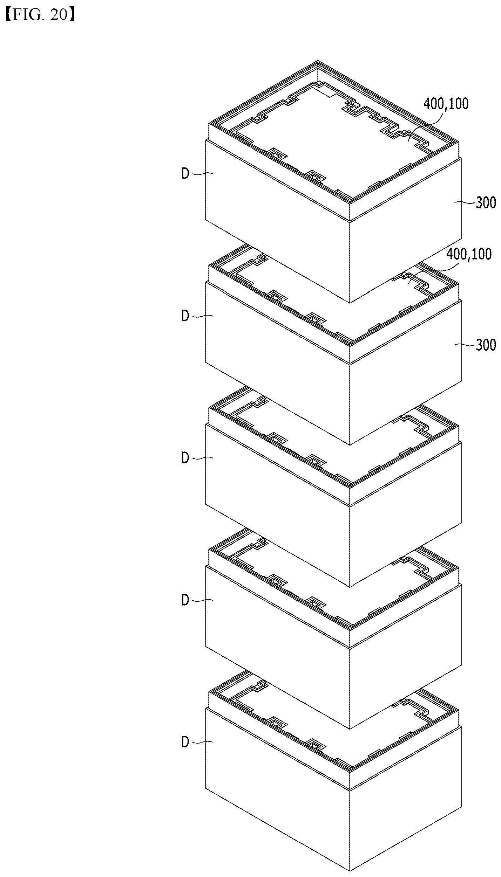

For reference, as described later in FIGS. 19 and 20, when a plurality of battery packs are stacked, an opened space between the pack case 300 and the outer cover 500 can be secured at the upper and lower end parts of each battery pack, if the height of the outer cover 500 is slightly smaller than the height of the pack case 300. That is, even if a plurality of battery packs are stacked in the up and down direction, an opened space between the pack case 300 and the outer cover 500 is secured for each battery pack, so that the venting gas can be smoothly discharged to the outside.

Referring again to FIG. 8, the outer surface of the pack case 300 is provided with partition walls 330 that protrude and extend outward from the outer surface.

As shown in detail in FIGS. 12 and 13, the moving distance of the venting gas in the venting flow path increases due to the partition wall 330, and the flame contained in the venting gas naturally disappears (naturally extinguishes) while hitting the partition wall 330. Therefore, the flame contained in the venting gas is not discharged to the outside of the outer cover 500.

The partition walls 330 are formed in at least one direction on the outer surface of the pack case 300. The embodiment of FIG. 8 illustrates a case in which the partition walls 330 are formed along the horizontal direction (length direction and/or width direction of the pack case 300) and the vertical direction (height direction of the pack case 300), so that the horizontal partition walls 330 and the vertical partition walls 330 intersect. However, the present disclosure is not limited to those illustrated, and it is sufficient that the partition walls 330 are formed so as to intersect the movement path of the venting gas.

Meanwhile, the rigidity of the pack case 300 can also be strengthened due to the partition wall 330.

Referring again to FIG. 9, the front cover 500a and the pair of side covers 500b of the outer cover 500 may be formed integrally, but may also be manufactured separately and coupled to each other.

Further, the opened space between the pack case 300 and the outer cover 500 (in the example of FIG. 10, the upper and lower sides of the outer cover 500) includes an eaves 520 that protrude and extend from the main body of the outer cover 500 toward the pack case 300. By further including the eaves 520, the function of covering the venting port 320 can be further strengthened. The eaves 520 may have a width comparable to the space between the outer cover 500 and the pack case 300, or may have a width smaller than that.

Further, the outer cover 500 is coupled to the outer surface of the pack case 300 while being separated at a prescribed distance, whereby as described above, the venting gas discharged from the venting hole 320 of the pack case 300 may move through a venting flow path formed in a space between the pack case 300 and the outer cover 500, and then be discharged to the outside of the outer cover 500.

The eaves 520 are provided with a plurality of venting holes 521 arranged in a row along the eaves 520. The venting gas that has moved through the venting flow path formed in a space between the pack case 300 and the outer cover 500 can be discharged through the venting hole 521 of the outer cover 500.

Meanwhile, the main body of the outer cover 500 may also comprise the partition walls 510 formed in at least one direction on the surface facing the pack case 300. Due to the partition wall 510, the moving distance of the venting gas in the venting flow path increases, and the flame contained in the venting gas is naturally extinguished while hitting the partition walls 510. Therefore, the flame contained in the venting gas is not discharged to the outside of the outer cover 500.

The partition walls 510 are formed in at least one direction on the outer surface of the outer cover 500. The embodiment of FIG. 11 illustrates a case in which the partition walls 330 are formed along the horizontal direction (length direction and/or width direction of the outer cover 500) and the vertical direction (height direction of the outer cover 500), so that the horizontal partition walls 510 and the vertical partition walls 510 intersect. However, the present disclosure is not limited to those illustrated, and it is sufficient that the partition walls 510 are formed so as to intersect the movement path of the venting gas.

Meanwhile, the rigidity of the outer cover 500 can also be strengthened due to the partition wall 510.

The outer cover 500 further includes a fastening member 530. It may be coupled to the fastening member 340 of the pack case 300. The embodiment of FIG. 10 illustrates a case where the fastening member 530 of the protruding hook-shaped outer cover 500 is coupled to the fastening member 340 of the insert groove-shaped pack case 300. Meanwhile, the present disclosure is not limited to those illustrated with respect to the method in which the outer cover 500 and the pack case 300 are coupled, and can be realized through various modifications and changes.

In addition, referring to FIG. 8, the pack case 300 may comprise a spacer 350 protruding from the outer surface. The spacer 350 protrudes by a prescribed distance between the pack case 300 and the outer cover 500. That is, the spacer 350 may contact the inner surface of the outer cover 500. Therefore, the spacer 350 can maintain a prescribed distance between the pack case 300 and the outer cover 500. In particular, even if the outer cover 500 receives an impact from the outside, the outer cover 500 is bent toward the pack case 300 to prevent the venting flow path between the pack case 300 and the outer cover 500 from becoming narrow.

Further, the protruding distance of the spacer 350 is greater than the protruding distance of the partition wall 330 of the pack case 300. Similarly, the protruding distance of the spacer 350 is greater than the protruding distance of the partition wall 510 of the outer cover 500. Thereby, when the venting gas moves in a space between the pack case 300 and the outer cover 500, it is prevented from being blocked by the partition wall 330 of the pack case 300 and the partition wall 510 of the outer cover 500. When a plurality of spacers 350 are provided, the plurality of spacers 350 is arranged to be spaced apart from each other so as not to block the venting flow path.

The spacer 350 may have a cross shape, for example, as shown in FIG. 8., but the present disclosure is not limited thereto, and any shape may be used as long as the space between the pack case 300 and the outer cover 500 is maintained, but the outer cover 500 can maintain its rigidity.

Additionally, by covering the outer surface of the pack case 300 with the outer cover 500, an aesthetic function may be imparted to the appearance of the battery pack.

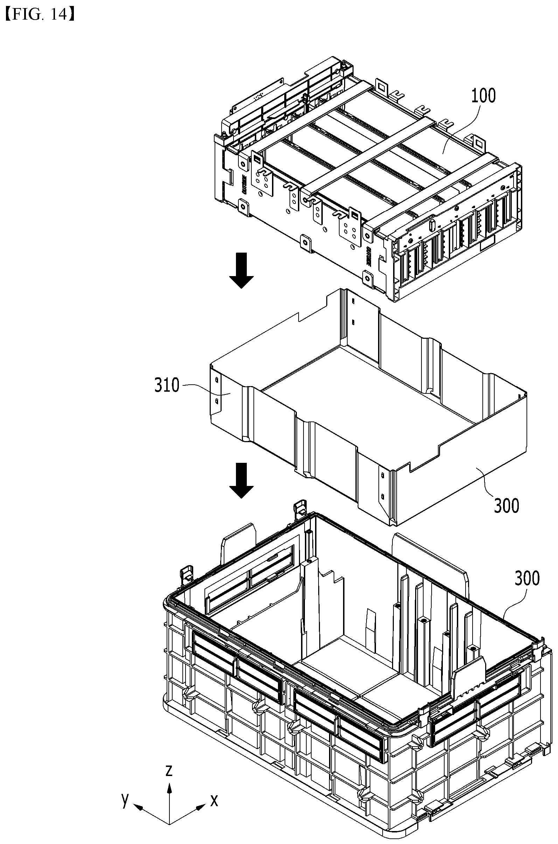

As shown in FIG. 14, the cell module assembly 100 shown in FIG. 6 may be housed in the internal space of an auxiliary case 310, and then be mounted on the pack case 300. The cell module assembly 100 is primarily housed in the internal space of the auxiliary case 310, and then finally housed in the pack case 300, thereby supplementing the rigidity of the cell module assembly 100 and preventing the alignment of the stack of the plurality of battery cells 110 at the cell module assembly 100 from being disturbed. The auxiliary case 310 may be made of metal, stainless steel, or the like, by way of example.

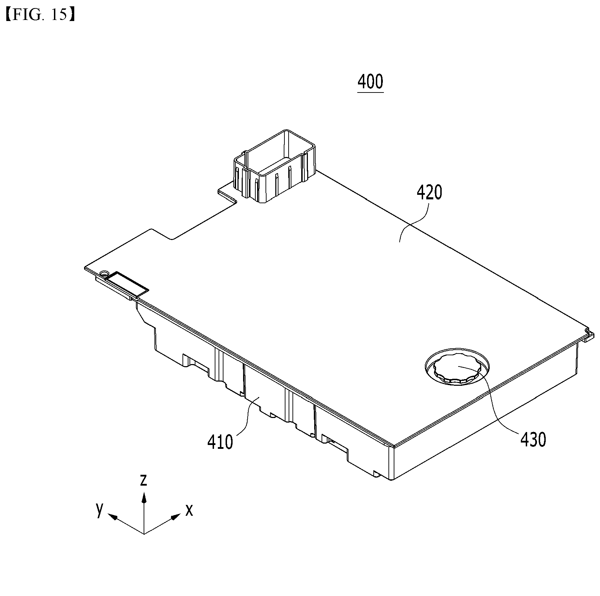

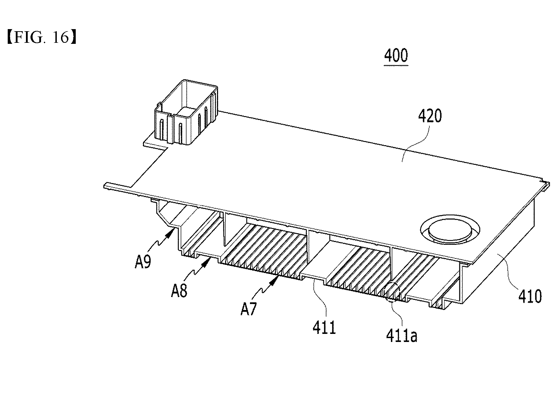

FIG. 15 is a perspective view of a fire extinguishing tank 400 included in the battery pack of FIG. 5. FIG. 16 is a perspective cross-sectional view of the fire extinguishing tank 400 of FIG. 15, and shows a cross section taken along line A5-A5' of FIG. 5. As described above in FIG. 1, the fire extinguishing tank 400 includes a lower tank 410 and an upper cover 420. The lower tank 410 and the upper cover 420 may be manufactured separately and seal bonded together, or may be manufactured integrally. The upper cover 420 may further include an injection port 430 capable of injecting a fire extinguishing agent. The injection port 430 can be closed with a stopper to seal the fire extinguishing tank 400.

The portion formed thinly in the base plate 411 of the lower tank 410 may function as a fragile portion 411a. That is, when a thermal event occurs in the battery cell 110 of the cell module assembly 100, the fragile portion 411a having a relatively thin thickness may be damaged first. When the fragile portion 411a is damaged and an opening is formed in the base plate 411, the fire extinguishing agent held inside the fire extinguishing tank 400 may be discharged to the cell module assembly 100 side via the fragile portion 411a.

The fragile portion 411a may be provided in a plurality of numbers. For example, the fragile portion 411a may have a shape narrow in width and long in length. That is, the fragile portion may have a linear shape, and may have a straight-line shape arranged in parallel with one edge of the fire extinguishing tank 400, and each fragile portion 411a may be arranged in parallel with one another.

Meanwhile, according to the embodiment of FIG. 15, the longitudinal direction of the battery cell 110 (e.g., the Y-axis direction in the figure) and the longitudinal direction of the fragile portion 411a (e.g., the X-axis direction in the figure) may be orthogonal to each other. That is, a plurality of fragile portions 411a are arranged to intersect with the longitudinal direction of the battery cell 110. Accordingly, the fire extinguishing agent can be supplied all together through the plurality of opened fragile portions 411a via the battery cell 110 along the longitudinal direction of the battery cell 110 where a thermal event has occurred, and the battery cell 110 in which a thermal event has occurred can be extinguished more efficiently and quickly.

Further, referring to FIG. 16, the base plate 411 of the lower tank 410 has a step. More specifically, the base plate 411 is largely divided as follows. The base plate consists of a portion A7 where the fragile portion 411a is located, a portion A8 in contact with the strap 140 of the cell module assembly 100, and a portion A9 located on the electrical connection unit 600 side. Among these, the height of the base plate 411 at the portion A7 where the fragile portion 411a is located is the lowest.

By ensuring that the fragile portion 411a of the lower tank 410 is arranged closest to the battery cell 110 as possible, when overheating or ignition occurs in some of the battery cells 110, rapid initial suppression is performed to more effectively prevent the occurrence of a dangerous situation such as secondary explosions due to transfer of heat or flame to adjacent battery cells 110.

In more detail, as shown in FIG. 6 regarding the cell module assembly 100, the height of the cell module assembly 100 is not constant due to the portion where the strap 140 is located, the portion where the busbar housing 130 is located (the connector 610, fuses, etc. are located outside the busbar housing 130), and the like. Regardless of this, if the height of the base plate 411 of the lower tank 410 of the fire extinguishing tank 400 is constant as a whole, a relatively empty space is created between the base plate 411 of the fire extinguishing tank 400 and the upper surface of the cell module assembly 100. In such a case, heat transfer from the battery cell 110 whose temperature has risen to the fragile portion 411a is impeded due to the empty space, whereby fire extinguishment is delayed accordingly.

When the battery cell 110 overheats, the fragile portion 411a is arranged immediately adjacent to the battery cell 110 whose temperature has risen, so that the fragile portion 411a is immediately damaged, and the battery cell 110 can be quickly cooled and extinguished.

In summary, the lower surface of the base plate 411 of the fire extinguishing tank 400 and the upper surface of the cell module assembly 100 have shapes that generally match each other. Accordingly, since the fire extinguishing tank 400 is arranged in closer contact with the cell module assembly 100, the battery cell 110 whose temperature has risen can be more effectively cooled, and a fire extinguishing agent can be injected more quickly into the battery cell 110 where overheating or ignition has occurred. Further, more extinguishing agent can be efficiently housed in the fire extinguishing tank 400. That is, if the height of the base plate 411 of the lower tank 410 of the fire extinguishing tank 400 is constant as a whole, the fire extinguishing tank 400 houses less fire extinguishing agent due to the corresponding empty space.

The fire extinguishing agent provided in the fire extinguishing tank 400 may be, for example, in the form of fire extinguishing liquid. Redundant description will be omitted and reference will be made to those described above.

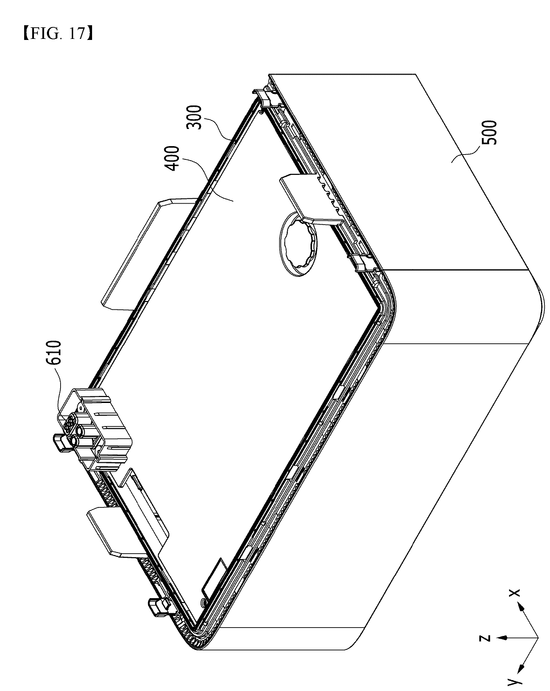

FIG. 17 is a perspective view of a battery pack in which all the constituent elements of the above-mentioned battery pack are coupled with each other with reference to FIGS. 5 to 16.

**In** addition, for the portions where the description regarding the battery pack in FIGS. 5 to 17 overlaps with the description regarding the battery pack in FIGS. 1 to 4, reference is made to those described above with reference to FIGS. 1 to 4.

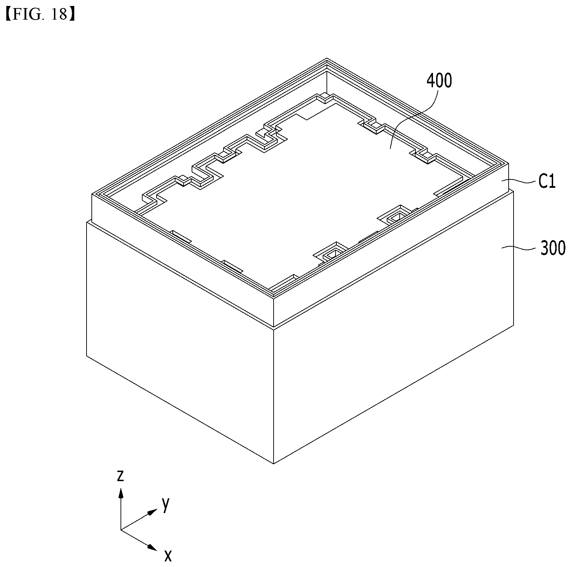

Meanwhile, the pack case 300 may be provided in a plurality of numbers, and be configured so as to be stacked in the up and down direction. This will be described in more detail with reference to FIGS. 18 to 20.

FIG. 18 is a perspective view schematically showing at least a partial configuration of the battery pack of FIGS. 1 to 17 according to the present disclosure. Further, FIGS. 19 and 20 are diagrams showing an embodiment in which the pack cases 300 shown in FIG. 18 are stacked in a plurality of numbers. FIGS. 18 to 20 schematically show the battery pack for convenience of understanding. For detailed configuration of the battery pack, reference is made to the details described above in FIGS. 1 to 17.

First, referring to FIG. 18, the pack case 300 may include a bottom portion and a side wall portion. The cell module assembly 100 can be housed in the internal space of the pack case 300, and the upper surface of the cell module assembly 100 can be covered with the fire extinguishing tank 400, thereby constituting a battery pack. For reference, in FIG. 18, the height of the upper side of the pack case 300 is shown to be greater than the height of the upper surface of the fire extinguishing tank 400. However, FIG. 18 is a schematic diagram and is only an example, and the present disclosure is not limited to those shown in FIG. 18. That is, on the contrary, the height of the upper surface of the fire extinguishing tank 400 may be greater than the height of the upper side of the pack case 300, and the height of the upper surface of the fire extinguishing tank 400 and the height of the upper side of the pack case 300 may be equal. Thus, various modifications are possible.

The pack cases 300 as shown in FIG. 18 may be provided in a plurality of numbers to form a stacked structure of battery packs as shown in FIG. 19 or FIG. 20. At this time, the battery pack in FIG. 18 may be one unit pack. And, such unit packs are provided in a plurality of numbers, so that an entire battery pack can be constructed in a module-stacked manner as shown in FIG. 19 or FIG. 20.

More specifically, for example, the configuration of FIG. 19 illustrates that three unit packs D are stacked in the up and down direction. And, the configuration of FIG. 20 illustrates that five unit packs D are stacked in the up and down direction. The present disclosure is not limited to those illustrated, and the number of unit packs D can be variously changed to match with the environment in which the present disclosure is implemented.

For example, if the present disclosure is realized by a battery pack as an energy storage system (ESS), the number of unit battery packs can be adjusted, so that the voltage band and/or storage capacity of the energy storage device can be realized to match with the relevant environment. According to such an embodiment configuration of the disclosure, by stacking one unit pack with a common structure in various ways, it is possible to comply with products with various voltage bands depending on the number of stacking. For example, by adjusting the number of stacking of the same unit pack, it may be possible to realize both a low-pressure band product as shown in FIG. 19 and a high-pressure band product as shown in FIG. 20. Therefore, compared to products limited only to specifications of a specific voltage band, economic efficiency and compatibility can be improved. Further, according to such an embodiment configuration, products with various storage capacities can also be realized depending on the number of stacking.

In other words, when stacked unit packs are connected in series, products with various voltage bands can be realized depending on the number of stacking. Further, when stacked unit packs are connected in parallel, products with various capacities (storage capacity) can be realized depending on the number of stacking.

In particular, each unit pack D may include a cell module assembly 100 therein. Further, each unit pack D includes a connector 610 so that each cell module assembly 100 can be electrically connected to each other during stacking as described above. In particular, such connectors 610 may be configured to be coupled to each other due to the vertical stacking of each unit pack D.

Moreover, in the above-mentioned embodiment configuration, each unit pack D may house a fire extinguishing tank 400 along with a cell module assembly 100. That is, each unit pack D includes a fire extinguishing tank 400 at the upper part of the cell module assembly 100, as described above. The battery packs stacked in a plurality of numbers have a stacked structure of fire extinguishing tank 400 - cell module assembly 100 - fire extinguishing tank 400 - cell module assembly 100 from top to bottom. The stacked battery pack of the present disclosure having such a structure can form a battery pack by increasing (expanding) the number of cell module assemblies 100 to increase storage capacity, and also can safely provide against a thermal event such as a fire in the cell module assembly 100. Therefore, according to this embodiment configuration of the present disclosure, the safety of the battery pack can be further improved.

Referring again to FIG. 18, another example of a coupling method between battery packs (pack case 300) stacked up and down is as follows. At the upper end of the side wall portion of the pack case 300, there may be a step formed in a concave shape inward, such as a step portion C1 for coupling. For example, the side wall portion of the pack case 300 has a thinner thickness. Further, although not shown in FIG. 18, a coupling recess may be formed in the bottom of the pack case 300 so that the coupling step C1 of the side wall part can be inserted. That is, when the pack case 300 stacks different pack cases 300 in the up and down direction, the coupling step C1 formed on the upper side of the side wall portion of the lower pack case 300 is formed on the upper pack case 300. Accordingly, when the plurality of pack cases 300 are stacked and coupled in the up and down direction, the outer surface of the pack case 300 may have a flat shape as a whole.

On the other hand, the coupling method for the fastening structure between the battery packs stacked one above the other is not limited to those shown in FIG. 18 and/or FIG. 8, and various other coupling methods can be modified or changed and applied to the present disclosure.

Further, the battery packs of the present disclosure can be connected to a battery management system (BMS, not shown). The battery management system monitors and manages the battery pack(s). The battery management system may be located on the uppermost layer of battery packs stacked one above the other. However, the position of the battery management system is not limited to those described above, and can be modified and changed in various ways to match with the method or environment in which the present disclosure is realized.

The battery pack according to the present disclosure may further include various other components included in the battery pack, in addition to the above-mentioned components. For example, the battery pack according to the present disclosure may include various electrical components for controlling or managing the charge and discharge of the battery pack, such as a battery management system (BMS), relays, fuses, and current sensors.

Further, the present disclosure is not limited to the above-described embodiments, and can be realized by modifying or changing the above-described embodiments to match with various environments in which the present disclosure is realized, such as by partially modifying the above-described embodiments or by combining the above-mentioned embodiments.

An energy storage system (ESS) according to the present disclosure includes one or more battery packs according to the present disclosure as described above. Further, the energy storage device according to the present disclosure may further include common components included in energy storage devices in addition to the battery pack.

The terms representing directions such as the upper side, the lower side, the left side, and the right side have been used in the present embodiment, but the terms used are provided simply for convenience of description and may become different according to the position of an object, the position of an observer, or the like.

While the present invention has been described in detail with reference to specific embodiments and illustrative drawings, the present invention is not limited thereto, and it will be apparent to those skilled in the art that various changes and modifications can be made within the spirit and scope of the disclosure as defined by the appended claims.

### [Description of Reference Numerals]

100: cell module assembly
110: battery cell
120: end plate
130: busbar housing
140: strap
200: blocking member
210: support plate
220: swelling pad
230: through hole
300: pack case
300a: lower case
300b: upper case
310: auxiliary case
320: venting port
330: partition wall
340: fastening member
350: spacer
400: fire extinguishing tank
410: lower tank
411: base plate
411a: fragile portion
412: side wall
420: upper cover
430: injection port
500: outer cover
500a: front cover
500b: side cover
510: partition wall
520: eaves
521: venting hole
530: fastening member
600: electrical connection unit
610: connector

## Claims

1. A battery pack comprising:
a cell module assembly including a battery cell stack in which a plurality of battery cells are stacked;
a pack case configured to house the cell module assembly and including a venting port on at least one surface; and
an outer cover that covers at least one surface of the pack case and is arranged apart from the outer surface of the pack case by a prescribed distance,
wherein a space between the pack case and the outer cover forms a venting flow path through which a venting gas, generated during a thermal event of the battery cell moves, and
wherein the venting gas is discharged to the outside through an opened space between the outer cover and the pack case, which is formed on at least one end part of the outer cover.

2. The battery pack according to claim 1, wherein:
the pack case includes at least one partition wall that protrudes from an outer surface of the pack case toward the outer cover so as to increase the path along which the venting gas moves.

3. The battery pack according to claim 2, wherein:
the partition wall includes a first partition wall having a shape extending along a length direction or a width direction of the pack case.

4. The battery pack according to claim 3, wherein:
the partition wall includes a second partition wall having a shape extending along a height direction of the pack case, and
the first partition wall and the second partition wall intersect with each other.

5. The battery pack according to claim **1,** wherein:
the outer cover includes at least one partition wall that protrudes from an inner surface of the outer cover toward the pack case so as to increase the path along which the venting gas moves.

6. The battery pack according to claim 5, wherein:
the partition wall includes a first partition wall having a shape extending along a length direction or a width direction of the outer cover.

7. The battery pack according to claim 6, wherein:
the partition wall includes a second partition wall having a shape extending along a height direction of the outer cover, and
the first partition wall and the second partition wall intersect with each other.

8. The battery pack according to claim 2, wherein:
the pack case further includes a spacer that protrudes from the outer surface of the pack case and contacts the outer cover, and
a distance at which the spacer protrudes is greater than a distance at which the partition wall protrudes.

9. The battery pack according to claim 1, wherein:
the pack case includes at least one venting port on the front surface and both side surfaces, and
the outer cover covers the front surface and both side surfaces of the pack case, respectively.

10. The battery pack according to claim 1, wherein:
the outer cover includes an eaves that covers the opened space between the pack case and the outer cover, and
the eaves includes a plurality of venting holes arranged along the eaves.

11. The battery pack according to claim 1,
further comprising a fastening member that connects the pack case and the outer cover to each other,
wherein the fastening member includes a female fastening member and a male fastening member.

12. The battery pack according to claim 1, wherein:
the battery pack is provided in a plurality of numbers, and
the plurality of battery packs are mechanically or electrically connected to each other.

13. The battery pack according to claim 12, wherein:
the plurality of battery packs can be stacked in an up and down direction.

14. The battery pack according to claim 12, wherein:
a height of the outer cover is smaller than a height of the pack case so that each of the plurality of battery packs has the opened space between the pack case and the outer cover.

15. An energy storage system comprising the battery pack according to claim 1.
